# EUROPÄISCHE PATENTSCHRIFT

(11) **EP 1 389 392 B1**
(45) Veröffentlichungstag und Bekanntmachung des Hinweises auf die Patenterteilung: **23.05.2007**
(21) Anmeldenummer: 02769414.0
(22) Anmeldetag: 04.04.2002
(51) Int. Cl.: H04L 29/06

(54) **MULTIMEDIASYSTEM FÜR EIN FAHRZEUG**
MULTIMEDIA SYSTEM FOR A VEHICLE
SYSTEME MULTIMEDIA POUR UN VEHICULE

(30) Priorität: 15.05.2001 DE 10123475
(43) Veröffentlichungstag der Anmeldung: 18.02.2004
(73) Patentinhaber: Volkswagen Aktiengesellschaft, 38436 Wolfsburg (DE)
(72) Erfinder: GLÄSER, Stefan, 38104 Braunschweig (DE); FLIEGNER, Jens, 29399 Wahrenholz (DE)
(86) Internationale Anmeldenummer: PCT/EP2002/003740
(87) Internationale Veröffentlichungsnummer: WO 2002/093829

(56) Entgegenhaltungen:
- LIND R ET AL: "THE NETWORK VEHICLE - A GLIMPSE INTO THE FUTURE OF MOBILE MULTI-MEDIA" IEEE AEROSPACE AND ELECTRONIC SYSTEMS MAGAZINE, IEEE INC. NEW YORK, US, Bd. 14, Nr. 9, September 1999 (1999-09), Seiten 27-32, XP000941847 ISSN: 0885-8985
- STIRLING A: "Mobile multimedia platforms" IEEE, 2000, Seiten 2541-2548, XP010525052

## Beschreibung

Die Erfindung betrifft ein Multimediasystem für ein Fahrzeug mit einem mehrere Fahrzeugkomponenten verbindenden Fahrzeug-Netzwerk und einem damit verbundenen, im Fahrzeug zu montierenden Fahrzeugrechner, auf dem Software zum Betrieb des Multimediasystems und/oder zur Interaktion mindestens einer Fahrzeugkomponente mit Peripherieeinrichtungen installiert ist, sowie ein Fahrzeug, insbesondere ein Kraftfahrzeug mit einem solchen Multimediasystem.

Die über ein Fahrzeug-Netzwerk verbundenen Fahrzeugkomponenten können dabei Komponenten des Antriebsstranges, Komponenten der Fahrzeugsicherheit, Komfortkomponenten sowie Multimediakomponenten umfassen.

Ein derartiges Multimedia system ist bekannt aus dem Dokument XP-94 1847.

Technisch ist es heutzutage ohne weiteres möglich, Fahrzeuge mit diversen Multimediakomponenten auszustatten. Nach R. Steinmetz, Multimedia-Technologie, Springer-Verlag 1999 ist ein Multimediasystem durch die rechnergestützte, integrierte Erzeugung, Manipulation, Darstellung, Speicherung und Kommunikation von unabhängigen Informationen gekennzeichnet, die in mindestens einem kontinuierlichen (zeitabhängigen) und einem diskreten (zeitunabhängigen) Medium codiert sind.

Multimediakomponenten umfassen neben Radio, CD-Player (-wechsler), Kassettendeck, Navigationssystem und Mobiltelefon insbesondere DVD-Player, Fahrzeug-PC, Fernsehempfänger, Empfänger für datenbasierte Dienste, hochauflösende Displays, Tastaturen, Notebooks, PDAs aber auch die notwendige Infrastruktur im Fahrzeug, die Netzwerkarchitektur aus diversen Fahrzeugbussystemen, Gateways, Bridges u.v.a.m.

Bisherige Systemlösungen sind überwiegend dadurch gekennzeichnet, daß Multimediakomponenten verschiedener Hersteller in der Regel nicht zueinander kompatibel sind. Für den Endkunden kann dies bedeuten, daß er sich bereits beim Kauf eines Kraftfahrzeugs für das Multimediasystem des Endgeräteherstellers seiner Wahl entscheiden und dies für die Lebenszeit des Fahrzeugs behalten muß, wenn er den aufwendigen Austausch des Systems vermeiden möchte. Darüber hinaus ist er für die gesamte Zeit, die er das Kraftfahrzeug in Gebrauch hat, an die Produkte dieses Endgeräteherstellers gebunden.

Es kommt hinzu, daß der Entwicklungszyklus der Informationstechnologie wesentlich schneller ist als derjenige der Automobilindustrie. Dementsprechend ist ein in ein neues Fahrzeug eingebautes Multimediasystem bereits nach kurzer Zeit nicht mehr zeitgemäß und muß sowohl hinsichtlich seiner Hardware-Komponenten als auch hinsichtlich seiner Software-Applikationen aktualisiert werden. Die Aktualisierung seines privat genutzten Personalcomputers erledigt der Nutzer in der Regel selbst und kann sich bei Nichtfunktionieren oder Fehlern, insbesondere bei Software-Problemen an den Händler bzw. Hersteller der Applikationen wenden. Bei der Integration eines Multimediasystems in ein Kraftfahrzeug wird jedoch der jeweilige Automobilhersteller zur Verantwortung für Sicherheit, Reparatur, Wartung und Aktualisierung gezogen werden.

Der vorliegenden Erfindung liegt die Aufgabe zugrunde, ein Multimediasystem der eingangs genannten Art für ein Fahrzeug zu schaffen, das die vorgenannten Probleme überwindet.

Gelöst wird diese Aufgabe mit einem Multimediasystem, das die Merkmale des Anspruchs 1 aufweist, sowie mit einem Fahrzeug nach Anspruch 15. Vorteilhafte Aus- und Weiterbildungen sind in den Unteransprüchen dargestellt.

Das erfindungsgemäße Multimediasystem umfaßt somit ein mehrere Fahrzeugkomponenten verbindendes Fahrzeug-Netzwerk, einen damit verbundenen, im Fahrzeug zu montierenden Fahrzeugrechner, auf dem Software zum Betrieb des Multimediasystems und zur Interaktion mindestens einer Fahrzeugkomponente mit Peripherieeinrichtungen Installiert ist, und mindestens einen von dem Fahrzeugrechner zumindest logisch und/oder funktionell getrennten Applikationsrechner, der einem Nutzer einen Zugriff auf externe Multimediadienste gestattet und der mit dem Fahrzeugrechner über eine sowohl in physikalischer als auch in logischer Hinsicht standardisierte oder standardisierbare Schnittstelle kommuniziert.

Das erfindungsgemäße Multimediasystem basiert auf der Grundidee, eine Multimedia-Plattform nicht mehr ausschließlich in einem Fahrzeugrechner zu integrieren, sondern die Multimedia-Plattform auf dem Fahrzeugrechner und einem mobilen Applikationsrechner zu verteilen. Hierbei löst man sich von der geräteorientierten Denkweise und geht über in eine funküonsorientierte Denkweise. Bei der funktionsorientierten Struktur enthält jedes Modul genau eine definierte Basisfunktion mit offener, standardisierter oder standardisierbarer Schnittstelle. Die intelligente Kombination aus Funktionsmodulen ergibt dann das Gesamtsystem, welches damit seinerseits offen ist und standardisierte oder standardisierbare Schnittstellen besitzt. Die Flexibilität des Gesamtsystems wird dadurch erheblich erhöht. Die Funktionsmodule sind dabei wiederverwendbar und reduzieren deutlich die Entwicklungskosten des Gesamtsystems.

Die schnellebigen Anwendungen (Funktionen) werden bei dem erfindungsgemäßen Multimediasystem zumindest logisch außerhalb des Fahrzeugrechners auf dem ebenso schnellebigen Applikationsrechner implementiert. Der Fahrer bzw. Nutzer kann mit den schnellebigen Anwendungen (Funktionen) verfahren, wie er es von seinem Heimcomputer gewohnt ist, d.h., er kann sich die neuesten Software-Updates aufspielen oder herunterladen, er kann den Applikationsrechner aufrüsten oder sich einen neuen Applikationsrechner kaufen, er kann verschiedene Anwendungen miteinander kommunizieren lassen, usw.

Auf dem Fahrzeugrechner verbleibt lediglich all jene Software, die zum Management des Multimediasystems im Fahrzeug absolut notwendig ist. Diese Software bleibt während der Lebenszeit des Fahrzeuges im wesentlichen unverändert. Entsprechendes gilt für die sowohl in physikalischer als auch in logischer Hinsicht standardisierte oder standardisierbare Schnittstelle zwischen Fahrzeugrechner und mobilem Applikationsrechner.

Nach einer Weiterbildung der Erfindung ist der Applikationsrechner nicht nur logisch, sondern gerätemäßig vom Fahrzeugrechner getrennt. Dabei kann der Applikationsrechner auch als mobile Einrichtung ausgebildet sein und vom Benutzer mitgeführt werden.

Eine andere Weiterbildung der Erfindung sieht vor, daß der Applikationsrechner einen Speicher aufweist, in dem persönliche Daten zumindest eines Nutzers, insbesondere individuelle Einstellungen gespeichert sind.

Vorzugsweise ist dem Fahrzeugrechner eine multifunktionale Bedieneinrichtung, wie sie beispielsweise aus der EP 701 926 A2 oder der WO 00/21795 bekannt ist, zugeordnet, mittels deren neben der Bedienung zumindest einzelner Fahrzeugkomponenten zumindest auch ein Zugriff bzw. eine Bedienung auf die im Applikationsrechner implementierten Applikationen erfolgt bzw. durchführbar ist. Zusätzlich kann der Applikationsrechner, insbesondere wenn der Applikationsrechner als mobile und abnehmbare Einrichtung ausgebildet ist, eine Anzeige- und/oder Bedieneinrichtung aufweisen.

Eine bevorzugte Ausgestaltung der Erfindung sieht vor, daß die auf dem Fahrzeugrechner installierte Software zumindest zur Steuerung des Multimediasystems und zur Interaktion mindestens einer Fahrzeugkomponente mit dem Applikationsrechner vorgesehen ist, insbesondere umfaßt die Software ein Betriebssystem und/oder Fernsteuerfunktionen. Außerdem ist die standardisierte und/oder standardisierbare Schnittstelle vorzugsweise breitbandig ausgebildet, um neben dem Austausch von Kontroll- und Nutzdaten auch Streaming-Mechanismen zu ermöglichen.

Eine weitere vorteilhafte Ausgestaltung besteht darin, daß die standardisierte oder standardisierbare Schnittstelle zwischen dem Fahrzeug- und Applikationsrechner als Firewall-Netzwerkknoten ausgebildet ist. Hierdurch kann ein nicht autorisierter Zugriff auf den Fahrzeugrechner von außen verhindert werden.

Eine andere oder zusätzliche Möglichkeit besteht darin, daß Gruppen von Fahrzeugkomponenten über einen Frewall-Netzwerkknoten mit dem Fahrzeugrechner verbunden sind, insbesondere sind dies die Komponenten des Antriebsstranges und/oder die Sicherheitskomponenten.

Nach einer Ausbildung weist der Applikationsrechner zumindest Sende- und/oder Empfangseinrichtungen für Point-To-Point-Übertragungsverfahren und/oder Point-To-Multipoint-Übertragungsverfahren und/oder Broadcast-Übertragungsverfahren auf.

Eine andere bevorzugte Ausgestaltung des erfindungsgemäßen Multimediasystems besteht darin, daß der mobile Applikationsrechner eine Sperrfunktion aufweist, mit der der Zugriff auf eine oder mehrere Applikationen teilweise oder vollständig sperrbar und entsperrbar ist. Diese Ausgestaltung ist sinnvoll, wenn der Applikationsrechner von verschiedenen Personen benutzt wird, die unterschiedliche Dienste in Anspruch nehmen wollen oder dürfen, wie z.B. Kinder. An dem Applikationsrechner lassen sich somit benutzerspezifische Profile einrichten.

Nach einer weiteren vorteilhaften Ausgestaltung kann das erfindungsgemäße Multimediasystem fahrzeugseitig, d. h. beispielsweise dem Fahrzeugrechner zugewiesen, ein Ortungssystem (z. B. Global-Position-System) aufweisen.

Eine andere Möglichkeit besteht darin, daß dem Applikationsrechner das Ortungssystem zugeordnet ist oder daß sowohl Fahrzeugrechner als auch Applikationsrechner ein Ortungssystem aufweisen. Diese Ausgestaltung ermöglicht zum Beispiel das Wiederfinden eines gestohlenen Fahrzeuges mittels des mobilen, beim Fahrzeughalter befindlichen Applikationsrechners.

Nachfolgend wird die Erfindung anhand einer ein Ausführungsbeispiel darstellenden Zeichnung näher erläutert. Es zeigen in schematischer Darstellung:
Fig. 1 ein herkömmliches Multimediasystem mit einem Fahrzeugrechner, auf dem eine vollständige Multimedia-Plattform implementiert ist, und
Fig. 2 ein erfindungsgemäßes Multimediasystem mit einer auf einen Fahrzeugrechner und einen mobilen Applikationsrechner verteilten Multimedia-Plattform.

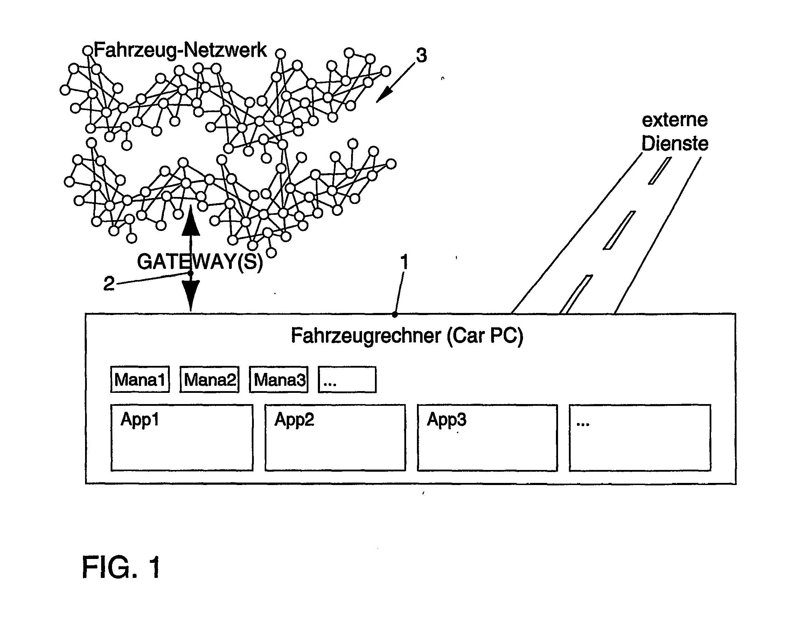

Bei dem in Fig. 1 dargestellten Multimediasystem ist ein Fahrzeugrechner 1 über eine oder mehrere Gateway-Verbindungen 2 mit einem mehrere Fahrzeugkomponenten verbindenden Fahrzeug-Netzwerk 3 verbunden. Auf dem Fahrzeugrechner 1 ist eine komplette Multimedia-Plattform implementiert, die dem Fahrer bzw. Nutzer den Zugriff auf externe Multimediadienste gestattet. Das in Fig. 1 dargestellte Multimediasystem hat den Nachteil, daß es angesichts des schnellen Entwicklungszyklus der Informationstechnologie nach relativ kurzer Zeit nicht mehr zeitgemäß ist und dann sowohl hinsichtlich seiner Hardware-Komponenten als auch hinsichtlich der Software-Applikationen aktualisiert werden müßte. Dies ist bei einer vollständig auf dem Fahrzeugrechner 1 implementierten Multimedia-Plattform aber mit einem relativ großen Aufwand verbunden. Zudem besteht bei einer vom Fahrzeughalter bzw. Nutzer selbst durchgeführten Modifikation die Gefahr, daß die einwandfreie Funktion des Systems beeinträchtigt wird. Insbesondere besteht die Gefahr, daß fehlerhafte oder nicht kompatible Applikationen auf dem Fahrzeugrechner 1 installiert werden.

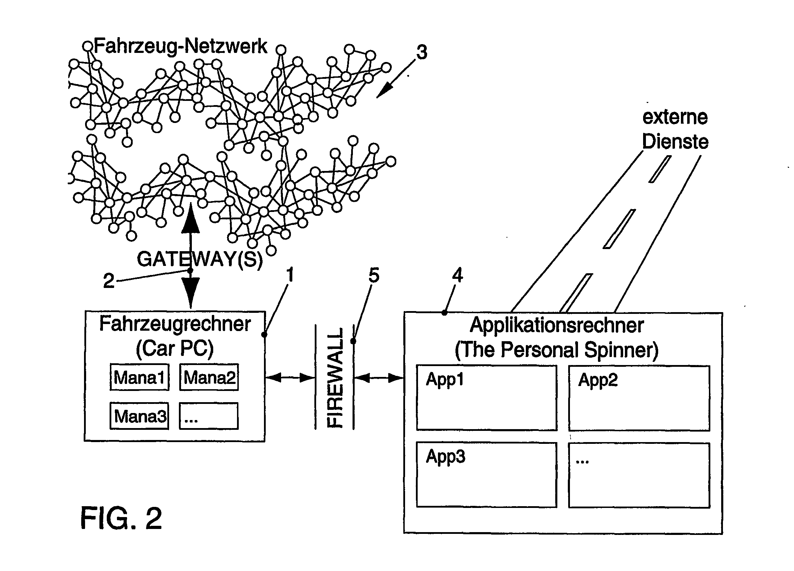

Das in Fig. 2 dargestellte erfindungsgemäße Multimediasystem ist dagegen durch eine verteilte Multimedia-Plattform gekennzeichnet. Das System umfaßt mindestens einen von dem Fahrzeugrechner 1 logisch getrennten mobilen Applikationsrechner 4, der mit dem Fahrzeugrechner 1 über eine standardisierte Schnittstelle 5 kommuniziert.

Bei dem Applikationsrechner 4 kann es sich um ein bereits existierendes oder um ein zukünftiges, noch zu entwickelndes Endgerät handeln. In jedem Fall sind in dem Applikationsrechner 4 eine Mehrzahl von Funktionen implementiert, die zum Teil miteinander verknüpft sein können und somit komplexere Funktionen bilden können. Diese Funktionen können in einer oder mehreren Anwendungen zusammengefaßt sein, welche wiederum entweder auf verschiedenen Geräten verteilt oder auf einem einzigen Gerät implementiert sein können.

Im Ausführungsbeispiel ist der Applikationsrechner 4 bei dem erfindungsgemäßen Multimediasystem als mobiles Plattformsegment ausgebildet, das dem Nutzer skalierbar den vollen Zugriff oder einen Teilzugriff auf externe Multimediadienste zu jeder Zeit und an jedem Ort gestattet. Ein Teilzugriff kann dann sinnvoll sein, wenn der Applikationsrechner 4 von verschiedenen Personen benutzt wird, die unterschiedliche Dienste in Anspruch nehmen wollen oder dürfen, wie z.B. Kinder oder Werkstattpersonal. Der Applikafionsrechner 4 ermöglicht somit das Einrichten von benutzerspezifischen Profilen.

Im allgemeinen ist der Applikationsrechner (Personal Spinner) 4 ein Platzhalter für eine heute noch nicht erwerbbare mobile universelle Multimedia-Plattform, die dadurch gekennzeichnet ist, daß sie dem Nutzer ein Netzwerk aus den für ihn passenden Diensten und Daten "spinnt", d.h. zusammenstellt. Seine persönlichen Daten und Dokumente hat der Nutzer auf dem Applikationsrechner 4 stets zur Verfügung. Dazu zählen insbesondere E-Mails, Adreßbuch und Kalender. Mit einem derartigen Applikationsrechner, auf dem ein oder mehrere nutzerspezifische Profile speicherbar sind, wie z.B. individuelle Desktop-Einstellungen ebenso wie Vorlieben für bestimmte Musik oder Restaurants, haben herkömmliche Personalcomputer nur noch die Funktion von Terminals. Sie werden lediglich benötigt, wenn ein größerer Bildschirm oder eine größere, ergonomische Tastatur gewünscht wird. Der mobile Applikationsrechner 4 repräsentiert somit einen persönlichen zentralen Zugang zu Internet, digitalem Fernsehen und Hörfunk, Datendiensten usw.

Der Fahrzeugrechner (CarPC) 1 ist als "schlanker" Rechner ausgebildet, der von weitgehend sämtlichen ressourcenintensiven Applikationen befreit ist. Auf dem Fahrzeugrechner 1 ist lediglich die Software installiert, die zum Betrieb des Multimediasystems und zur Interaktion der Fahrzeugkomponente mit der Peripherie notwendig ist. Diese "Management-Software" beinhaltet neben dem Betriebssystem auch sämtliche Fernsteuerungsfunktionen.

Die Hard- und Software des Fahrzeugrechners 1 bleibt während der Lebensdauer des zugehörigen Fahrzeugs weitgehend unverändert. Aufgrund der elementaren und damit ressourcenschonenden Eigenschaften der installierten Software reduziert sich der Wartungsaufwand auf ein Minimum. Sollte dennoch eine Aktualisierung der Software erforderlich sein, geht dies relativ problemlos mittels des mobilen Applikationsrechners 4 oder einer entsprechenden in einer Service-Werkstatt vorhandenen Einrichtung zur Software-Aktualisierung.

Die Software- und Hardware-Architektur des Fahrzeugrechners 1 sollte vom Fahrzeughersteller in Kooperation mit den Zulieferern, d.h. den Herstellern der Applikationsrechner sowie den Wettbewerbern erarbeitet werden, um einen möglichst offenen Standard zu schaffen, der letztendlich auch eine breite Anwendung findet.

Der Fahrzeugrechner 1 steuert zudem auch ein sogenanntes Human-Machine-Interface (HMI), bei dem es sich beispielsweise um eine Multifunktionsbedieneinrichtung handelt, wie sie aus der EP 701 926 A2 oder der WO 00/21795 bekannt ist. Das Human-Machine-Interface verleiht dem erfindungsgemäßen Multimediasystem somit ein fahrzeugherstellerspezifisches Anzeige- und Erscheinungsbild. Die Software des Human-Machine-Interfaces und des zugehörigen Controllers werden vom jeweiligen Fahrzeughersteller auf dem Fahrzeugrechner 1 installiert.

Wie bereits erwähnt, kommunizieren der Fahrzeugrechner 1 und der Applikationsrechner 4 über eine standardisierte oder standardisierbare Schnittstelle 5. Die Standardisierung umfaßt sowohl die physikalische wie auch die logische (Protokoll-) Schnittstelle.

Die Schnittstelle 5 ist breitbandig ausgebildet, um neben dem Austausch von Kontroll- und Nutzdaten auch Streaming-Mechanismen zu ermöglichen. Im Normalfall wird die standardisierte oder standardisierbare Schnittstelle 5 während der Lebenszeit des Fahrzeuges nicht oder nur wenig geändert. Sollte eine Änderung erforderlich sein, kann dies aufgrund der Reduktion der Schnittstelle 5 auf die Basiskommunikation zwischen Fahrzeugrechner 1 und Applikationsrechner 4 mit minimalem Aufwand durchgeführt werden.

Das erfindungsgemäße Multimediasystem zeichnet sich durch folgende Vorteile aus:
◆ Das erfindungsgemäße Multimediasystem mit verteilter Multimedia-Plattform macht die Nutzung sämtlicher Multimediadienste in einem Fahrzeug überhaupt erst sinnvoll und kostengünstig möglich.
**◆** Es wird eine durchgängige Architektur für heterogene Kommunikationswelten erreicht.
◆ Alle Dienste, die theoretisch bei einer nicht-verteilten Multimedia-Architektur nutzbar wären, sind auch mit dem erfindungsgemäßen Multimediasystem nutzbar. Darüber hinaus gibt es noch zusätzliche Funktionen, wie z.B. das Wiederfinden des Fahrzeuges, wenn das Fahrzeug mit einem Navigationssystem ausgestattet ist und diesem ein im Applikationsrechner integriertes GPS-Modul zugeordnet ist. Des weiteren entfällt das Synchronisieren von Kalender und Adreßbuch zwischen Fahrzeugrechner, Organiser, Heimcomputer und Arbeitsplatz, da der Fahrer bzw. Nutzer des erfindungsgemäßen Multimediasystems alle persönlichen Daten auf seinem mobilen Applikationsrechner stets bei sich hat. Sein persönliches Profil trägt der Nutzer auf seinem Applikationsrechner stets bei sich. Dieses Profil beinhaltet insbesondere Steuerbefehle zur individuellen Einstellung der Desktop-Oberfläche sowie Sitz- und Spiegeleinstellungen u.a.m.
◆ Die logische Trennung von Fahrzeugrechner und Applikationsrechner entkoppelt den Produktzyklus eines Fahrzeuges vom sehr kurzen Entwicklungszyklus der Informationstechnologie.
◆ Es ergeben sich erhebliche Einsparungen für den Fahrzeughersteller in den Entwicklungskosten einer Multimedia-Plattform durch die Reduzierung auf Grundfunktionen mit langfristiger Aktualität.
◆ Der Fahrzeughersteller trägt lediglich die Verantwortung für den Fahrzeugrechner und die Schnittstelle zum Applikationsrechner. Obwohl sämtliche Multimedia-Applikationen so im Fahrzeug nutzbar sind, trägt die Verantwortung für fehlerhafte oder nicht-kompatible Applikationen bzw. nicht verfügbare oder fehlerhafte externe Dienste der Hersteller des Applikationsrechners bzw. der Dienste-Anbieter. Damit steht ein für den Fahrzeughersteller bzw. für Servicewerkstätten wartbares Multimediasystem zur Verfügung.
◆ Für den Käufer des Fahrzeuges ergibt sich ein deutlich preisgünstiger Mehrwert, da der relativ teure Applikationsrechner samt Anwendungen nicht zum Fahrzeug gehört. Der Kunde erhält mit der verteilten Multimedia-Plattform die Option, deren bereits vorhandene Funktionalitäten sowie zukünftige Funktionalitäten im Fahrzeug zu nutzen.
◆ Es wird dem Kunden die größtmögliche Flexibilität hinsichtlich der Zusammenstellung der von ihm gewünschten Multimediadienste geboten.

## Patentansprüche

1. Multimediasystem für ein Fahrzeug, mit einem mehrere Fahrzeugkomponenten verbindenden Fahrzeug-Netzwerk und einem damit verbundenen, im Fahrzeug zu montierenden Fahrzeugrechner, auf dem Software zum Betrieb des Multimediasystems und/oder zur Interaktion mindestens einer Fahrzeugkomponente mit Peripherieeinrichtungen installiert ist, wobei durch mindestens einen von dem Fahrzeugrechner (1) zumindest logisch getrennten Applikationsrechner (4), der einem Nutzer einen Zugriff auf externe Multimediadienste gestattet und mit dem Fahrzeugrechner (1) über eine sowohl in physikalischer als auch in logischer Hinsicht standardisierte oder standardisierbare Schnittstelle (5) kommuniziert,
**dadurch gekennzeichnet, dass**
die auf dem Fahrzeugrechner (1) installierte Software zumindest zur Steuerung des Multimediasystems und zur Interaktion mindestens einer Fahrzeugkomponente mit dem Applikationsrechner (4) vorgesehen ist, wobei die auf dem Fahrzeugrechner (1) installierte Software ein Betriebssystem und Fernsteuerungsfunktionen umfasst, wohingegen Nutzer-Anwendungen auf dem zumindest logisch getrennten Applikationsrechner (4) installiert sind.

2. Multimediasystem nach Anspruch 1, **dadurch gekennzeichnet, dass** der Applikationsrechner (4) physisch vom Fahrzeugrechner (1) getrennt ist.

3. Multimediasystem nach Anspruch 2, **dadurch gekennzeichnet, dass** der Applikationsrechner (4) eine mobile Einrichtung ist.

4. Multimediasystem nach einem der Ansprüche 1 bis 3, **dadurch gekennzeichnet, dass** der Applikationsrechner (4) einen Speicher aufweist, in dem persönliche Daten mindestens eines Nutzers gespeichert sind.

5. Multimediasystem nach einem der Ansprüche 1 bis 4, **dadurch gekennzeichnet, dass** dem Fahrzeugrechner (1) eine multifunktionale Bedieneinrichtung zugeordnet ist, mittels derer ein Zugriff auf im Applikationsrechner (4) implementierte Applikationen erfolgt bzw. durchführbar ist.

6. Multimediasystem nach einem der Ansprüche 1 bis 5, **dadurch gekennzeichnet, dass** die standardisierte Schnittstelle (5) als Firewall-Netzwerkknoten ausgebildet ist.

7. Multimediasystem nach einem der Ansprüche 1 bis 6, **dadurch gekennzeichnet, dass** die Fahrzeugkomponenten in Gruppen zusammengefasst sind und dass zumindest eine der Gruppen der Fahrzeugkomponenten über einen Firewall-Netzwerkknoten mit dem Fahrzeugrechner (1) verbunden sind.

8. Multimediasystem nach einem der Ansprüche 1 bis 7, **dadurch gekennzeichnet, dass** der Applikationsrechner (4) zumindest Sende- und/oder Empfangseinrichtungen für Point-To-Point-Übertragungsverfahren und/oder Point-To-Multipoint-Übertragungsverfahren und/oder Broadcast-Übertragungsverfahren aufweist.

9. Multimediasystem nach einem der Ansprüche 1 bis 8, **dadurch gekennzeichnet, dass** dem Fahrzeugrechner (1) und/oder dem Applikationsrechner (4) eine Ortungseinrichtung zugeordnet ist.

10. Multimediasystem nach einem der Ansprüche 1 bis 9, **dadurch gekennzeichnet, dass** der Applikationsrechner (4) eine Sperrfunktion aufweist, mit der der Zugriff auf eine oder mehrere Applikationen teilweise oder vollständig sperrbar und entsperrbar ist.

11. Multimediasystem nach einem der Ansprüche 1 bis 10, **dadurch gekennzeichnet, dass** in dem Speicher des Applikationsrechners (4) ein oder mehrere nutzerspezifische Zugriffsprofile für den Zugriff auf verschiedene externe Multimediadienste speicherbar sind.

12. Multimediasystem nach einem der Ansprüche 1 bis 11, **dadurch gekennzeichnet, dass** in dem Speicher des Applikationsrechners (4) ein oder mehrere nutzerspezifische Profile zur Einstellung einer oder mehrerer Anzeigeeinrichtungen, Bedieneinrichtungen und/oder Fahrzeugkomponenten, wie Sitze, Spiegel und Radio, speicherbar sind.

13. Multimediasystem nach einem der Ansprüche 1 bis 12, **dadurch gekennzeichnet, dass** der Applikationsrechner (4) eine Anzeigeeinrichtung und Bedienelemente aufweist.

14. Multimediasystem nach Anspruch 13, **dadurch gekennzeichnet, dass** in dem Applikationsrechner (4) Funktionen eines Personal-Computers, eines Mobiltelefons und/oder eines Organizer mit Adressbuch- und Kalenderfunktionen integriert sind.

15. Fahrzeug, insbesondere Kraftfahrzeug, mit einem Multimediasystem gemäß einem der Ansprüche 1 bis 14.

## Claims

1. Multimedia system for a vehicle, having a vehicle network which connects a plurality of vehicle components and having a vehicle computer which is connected thereto, can be mounted in the vehicle and on which there is installed software for operating the multimedia system and/or for at least one vehicle component to interact with peripheral devices, and having at least one application computer (4) which is at least logically separate from the vehicle computer (1), allows, a user to access external multimedia services and communicates with the vehicle computer (1) via an interface (5) which is standardized or standardizable both in a physical and in a logical respect,
**characterized in that**
the software installed on the vehicle computer (1) is provided at least for controlling the multimedia system and for at least one vehicle component to interact with the application computer (4), the software installed on the vehicle computer (1) comprising an operating system and remote control functions, whereas user applications are installed on the at least logically separate application computer (4).

2. Multimedia system according to Claim 1, **characterized in that** the application computer (4) is physically separate from the vehicle computer (1).

3. Multimedia system according to Claim 2, **characterized in that** the application computer (4) is a mobile device.

4. Multimedia system according to one of Claims 1 to 3, **characterized in that** the application computer (4) has a memory storing personal data from at least one user.

5. Multimedia system according to one of Claims 1 to 4, **characterized in that** the vehicle computer (1) has an associated multifunctional operator control device which is used or can be used to access applications implemented in the application computer (4).

6. Multimedia system according to one of Claims 1 to 5, **characterized in that** the standardized interface (5) is in the form of a firewall network node.

7. Multimedia system according to one of Claims 1 to 6, **characterized in that** the vehicle components are combined into groups, and **in that** at least one of the groups of vehicle components is connected to the vehicle computer (1) via a firewall network node.

8. Multimedia system according to one of Claims 1 to 7, **characterized in that** the application computer (4) has at least transmission and/or reception devices for point-to-point transmission methods and/or point-to-multipoint transmission methods and/or broadcast transmission methods.

9. Multimedia system according to one of Claims 1 to 8, **characterized in that** the vehicle computer (1) and/or the application computer (4) has/have an associated position-finding device.

10. Multimedia system according to one of Claims 1 to 9, **characterized in that** the application computer (4) has a blocking function which can be used for partly or completely blocking and unblocking access to one or more applications.

11. Multimedia system according to one of Claims 1 to 10, **characterized in that** the memory of the application computer (4) can be used to store one or more user-specific access profiles for accessing various external multimedia services.

12. Multimedia system according to one of Claims 1 to 11, **characterized in that** the memory of the application computer (4) can be used to store one or more user-specific profiles for setting one or more display devices, operator control devices and/or vehicle components, such as seats, mirrors and radio.

13. Multimedia system according to one of Claims 1 to 12, **characterized in that** the application computer (4) has a display device and operator control elements.

14. Multimedia system according to Claim 13, **characterized in that** the application computer (4) incorporates functions of a personal computer, of a mobile telephone and/or of an organizer with address-book and calendar functions.

15. Vehicle, particularly a motor vehicle, having a multimedia system according to one of Claims 1 to 14.

## Revendications

1. Système multimédia pour un véhicule, comprenant un réseau de véhicule reliant plusieurs composants de véhicule et un ordinateur de véhicule relié à celui-ci, à monter sur le véhicule et sur lequel des logiciels pour l'exploitation du système multimédia et/ou pour une interaction d'au moins un composant de véhicule avec des installations périphériques sont installés, et comprenant au moins un ordinateur d'applications (4), séparé au moins de façon logique de l'ordinateur de véhicule (1), et permettant à un utilisateur d'accéder à des services multimédia externes et communiquant avec l'ordinateur de véhicule (1) à travers une interface (5) standardisée ou pouvant être standardisée aussi bien du point de vue physique que du point de vue logique,
**caractérisé en ce que**
les logiciels installés sur l'ordinateur de véhicule (1) sont prévus au moins pour la commande du système multimédia et pour l'interaction d'au moins un composant de véhicule avec l'ordinateur d'applications (4), dans lequel les logiciels installés sur l'ordinateur de véhicule (1) comprennent un système d'exploitation et des fonctions de télécommande, alors que des applications utilisateur sont installées sur ledit ordinateur d'applications (4) séparé au moins de façon logique.

2. Système multimédia selon la revendication 1, **caractérisé en ce que** l'ordinateur d'applications (4) est séparé physiquement de l'ordinateur de véhicule (1).

3. Système multimédia selon la revendication 2, **caractérisé en ce que** l'ordinateur d'applications (4) est un dispositif mobile.

4. Système multimédia selon l'une quelconque des revendications 1 à 3, **caractérisé en ce que** l'ordinateur d'applications (4) présente une mémoire, dans laquelle des données personnelles d'au moins un utilisateur sont mémorisées.

5. Système multimédia selon l'une quelconque des revendications 1 à 4, **caractérisé en ce qu'**un dispositif de commande multifonctionnel est attribué à l'ordinateur de véhicule (1), au moyen duquel un accès à des applications mises en oeuvre sur l'ordinateur d'applications (4) est effectué ou peut être effectué.

6. Système multimédia selon l'une quelconque des revendications 1 à 5, **caractérisé en ce que** l'interface standardisée (5) est réalisée comme un noeud de réseau pare-feu.

7. Système multimédia selon l'une quelconque des revendications 1 à 6, **caractérisé en ce que** les composants de véhicule sont rassemblés en groupes et **en ce qu'**au moins l'un des groupes des composants de véhicule est relié à l'ordinateur de véhicule (1) par l'intermédiaire d'un noeud de réseau pare-feu.

8. Système multimédia selon l'une quelconque des revendications 1 à 7, **caractérisé en ce que** l'ordinateur d'applications (4) présente au moins des dispositifs d'émission et/ou de réception pour des procédés de transmission de point à point et/ou des procédés de transmission de point à multipoint et/ou des procédés de transmission par diffusion.

9. Système multimédia selon l'une quelconque des revendications 1 à 8, **caractérisé en ce qu'**un dispositif de localisation est attribué à l'ordinateur de véhicule (1) et/ou à l'ordinateur d'applications (4).

10. Système multimédia selon l'une quelconque des revendications 1 à 9, **caractérisé en ce que** l'ordinateur d'applications (4) présente une fonction de verrouillage qui permet de verrouiller et de déverrouiller partiellement ou complètement l'accès à une ou plusieurs applications.

11. Système multimédia selon l'une quelconque des revendications 1 à 10, **caractérisé en ce que** dans la mémoire de l'ordinateur d'applications (4), un ou plusieurs profils d'accès spécifiques à l'utilisateur peuvent être mémorisés pour l'accès à différents services multimédia externes.

12. Système multimédia selon l'une quelconque des revendications 1 à 11, **caractérisé en ce que** dans la mémoire de l'ordinateur d'applications (4), un ou plusieurs profils spécifiques à l'utilisateur peuvent être mémorisés pour le réglage d'un ou de plusieurs dispositifs d'affichage, dispositifs de commande et/ou composants de véhicule, comme des sièges, des miroirs ou une radio.

13. Système multimédia selon l'une quelconque des revendications 1 à 12, **caractérisé en ce que** l'ordinateur d'applications (4) présente un dispositif d'affichage et des éléments de commande.

14. Système multimédia selon la revendication 13, **caractérisé en ce que** dans l'ordinateur d'applications (4), des fonctions d'un ordinateur individuel, d'un téléphone mobile et/ou d'un organiseur avec des fonctions de carnet d'adresse et de calendrier sont intégrées.

15. Véhicule, en particulier véhicule automobile, comprenant un système multimédia selon l'une quelconque des revendications 1 à 14.
